# EUROPEAN PATENT APPLICATION

(11) **EP 2 557 643 A1**
(43) Date of publication of application: **13.02.2013**
(21) Application number: 11006579.4
(22) Date of filing: 10.08.2011
(51) Int. Cl.: H02B 1/21, H02B 1/36, H02B 13/025

(54) **Motor control center and bus assembly therefor**

(71) Applicant: Eaton Corporation, Cleveland, OH 44114-2584 (US)
(72) Inventor: Morris, Robert Allan, Fayetteville North Carolina 28311 (US); Yee, Edgar, Chapel Hill North Carolina 27316 (US)
(74) Representative: Wagner, Karl H.

(57) **Abstract**

A bus assembly is provided for a motor control center (MCC). The MCC includes an enclosure, an electrical switching apparatus, such as a circuit breaker, which is removably coupled to the enclosure, and at least one subunit. The bus assembly includes a horizontal bus, a number of vertical buses, and a number of short circuit protective devices (SCPDs), such as fuses or circuit breakers. The horizontal bus is electrically connected to the circuit breaker, each vertical bus electrically connects a corresponding subunit to the horizontal bus, and each SCPD is disposed between the horizontal bus and a corresponding one of the vertical buses. The SCPDs reduce the peak current level and arc flash energy experienced by the subunits, and relatively quickly clear the arcing event.

## Description

### BACKGROUND

### Field

The disclosed concept relates generally to motor control systems, and more particularly, to motor control centers. The disclosed concept also relates to bus assemblies for motor control centers.

### Background Information

Motor control centers are used, for example, in some commercial and industrial applications to distribute electrical power to a variety of loads (e.g., without limitation, relatively high power electrical motors, pumps, and other loads).

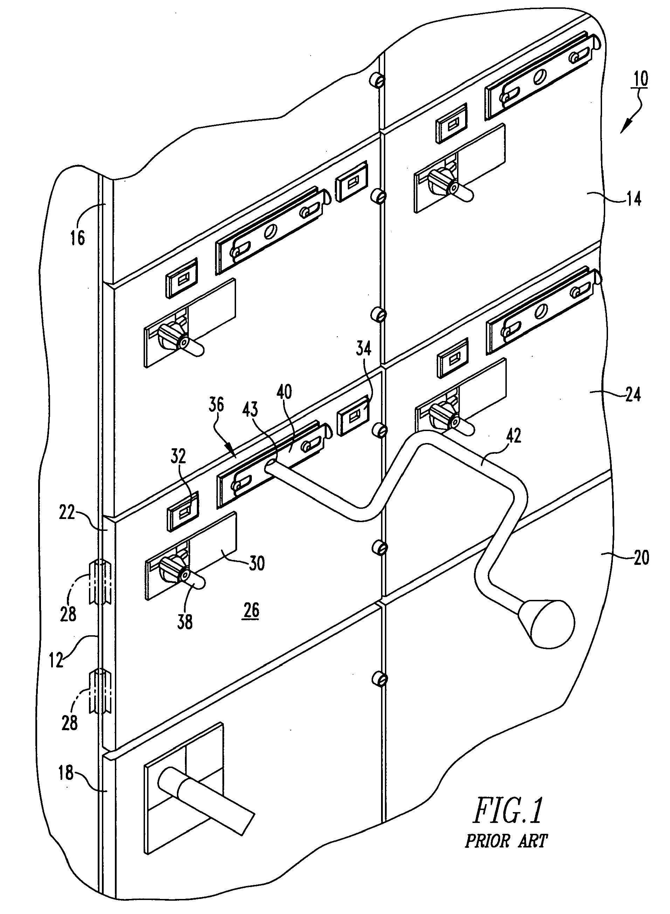

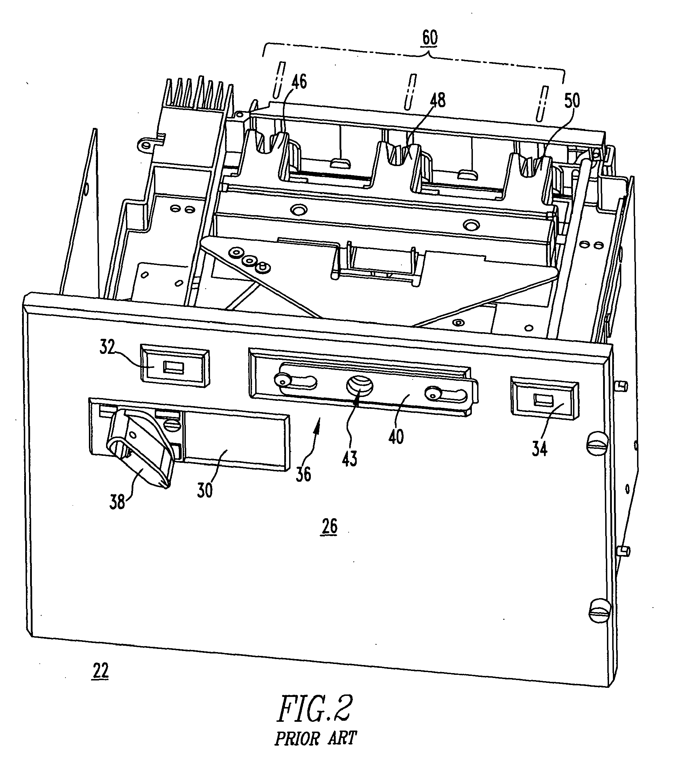

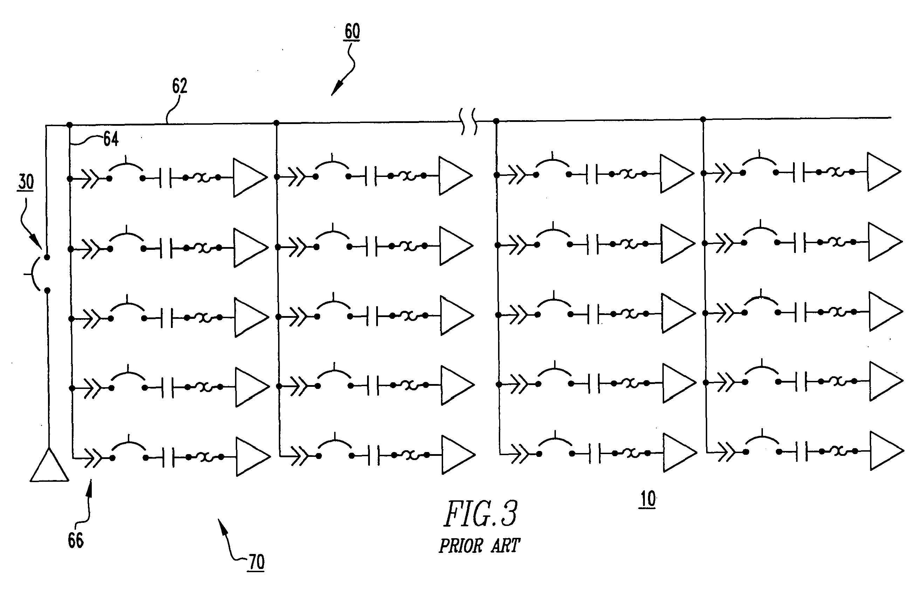

Figure 1, for example, shows a portion of a motor control center 10. The motor control center 10 includes a multi-compartment enclosure 12 for receiving a plurality of motor control modules 14,16,18,20,22,24, commonly referred to as "buckets". Typically, each bucket (see, e.g., bucket 22 of Figure 1; also shown in Figure 2) is a removable, pull-out subunit that has, or is installed behind, a door 26. The door 26 is preferably coupled to the housing 12 by hinges 28 (shown in phantom line drawing in Figure 1) to permit access to motor control components of the bucket 22 while it is installed in the enclosure 12. For example and without limitation, the door 26 permits access to a circuit breaker assembly 30, a stab indicator 32, a shutter indicator 34, and a line contact actuator 36. When the bucket 22 is fully installed and electrically connected behind the door 26 of the enclosure 10, an operator may operate a disconnect handle 38. In a de-energized state of the motor control center 10, the operator may operate an isolation feature by moving a slide 40 and inserting crank 42 through a hole 43 in the door 26 to access the line contact actuator 36 to move a number of line contacts (see, for example, stab contacts 46,48,50 of the bucket 22 of Figure 2) to an isolated position out of (see Figure 2) electrical contact with a bus assembly 60 (partially shown in phantom line drawing in Figure 2; see also Figure 3) of the motor control center 10.

A portion of a circuit diagram for the motor control center 10, in accordance with the present industry standard practice, is shown in Figure 3. In the example of Figure 3, the motor control center 10 is for a relatively low voltage (e.g., without limitation, up to 600V) system including a main three phase bus assembly 60 having a horizontal bus 62, which is fed by a main circuit breaker 30 and rated, for example and without limitation, up to 3200A. More specifically, the motor control center 10 is made up of a series of structures each housing a vertical bus 64 typically rated, for example and without limitation, at 300A, 600A, 800A or 1200A. Subunits, for example, in the form of motor control starter units 70 or feeder units (not shown) of various different sizes and configurations, are electrically connected to the vertical buses 64 by a suitable electrical connector assembly (generally indicated by reference 66 in Figure 3) such as, for example and without limitation, a male/female stab connector assembly. In accordance with applicable safety regulations, the bus assembly 60 of the motor control center 10 is rated to withstand arcing events with an associated short circuit current level of about 42 kA, about 65 kA and about 100 kA, for a time duration of about 50 ms for NEMA rated products, and up to 1 second for IEC rated products. The main circuit breaker 30 typically provides the short circuit protection for the motor control center 10. The clearing time for clearing the arcing event is about 50 ms (e.g., about three cycles) for a NEMA application. Motor control centers 10 are described in greater detail, for example, in commonly assigned U.S. Patent Application Publications 2009/0086414, 2008/0258667, 2008/0023211 and 2008/0022673, which are hereby incorporated herein by reference.

Safety is a primary concern in the electrical industry. One point of focus relates to electrical safety with respect to uncontrolled arc flash events within motor control centers. Arc flash is a dangerous condition associated with the explosive release of energy caused by an electrical arc (e.g., arcing event). This fault can result from many factors including, for example and without limitation, dropped tools, accidental contact with electrical systems, build up of conductive dust, corrosion, or improper work procedures. A relatively minor event initiated within a motor control center subunit, for example, caused by a flash over to ground, could quickly propagate into a phase-to-phase fault and then a full blown three phase arcing fault, with the arc potentially jumping to the line side of the subunit circuit breaker or fuse. Hence, arc flash energy can be significant and pose a serious safety hazard.

There is room for improvement in motor control centers, and in bus assemblies therefor.

### SUMMARY

These needs and others are met by embodiments of the disclosed concept, which are directed to a bus assembly for a motor control center wherein, among other benefits, the bus assembly limits arc flash energy, thereby reducing short circuit and other electrical stresses on bus and motor control center components which, in turn, allows more compact motor control center bus assembly and subunit configurations to be implemented.

As one aspect of the disclosed concept, a bus assembly is provided for a motor control center. The motor control center includes an enclosure, an electrical switching apparatus removably coupled to the enclosure, and at least one subunit. The bus assembly comprises: a horizontal bus structured to be electrically connected to the electrical switching apparatus; a number of vertical buses each structured to electrically connect a corresponding one of the at least one subunit to the horizontal bus; and a number of short circuit protective devices each being disposed between the horizontal bus and a corresponding one of the vertical buses.

The motor control center may be structured to withstand an arcing event. The arcing event may have an associated peak current level and arc flash energy, wherein each of the short circuit protective devices is structured to reduce the peak current level and arc flash energy experienced by the subunit. The motor control center may be rated to withstand the arcing event for a predetermined duration, wherein the short circuit protective devices are structured to clear the arcing event from the corresponding one of the vertical buses faster than the predetermined duration.

The number of short circuit protective devices may be a number of circuit breakers or fuses. The short circuit protective devices may be plug-in modules removably connected to the horizontal bus.

A motor control center, which incorporates the aforementioned bus assembly is also disclosed.

### BRIEF DESCRIPTION OF THE DRAWINGS

A full understanding of the disclosed concept can be gained from the following description of the preferred embodiments when read in conjunction with the accompanying drawings in which:
Figure 1 is an isometric view of a portion of a motor control center;
Figure 2 is an isometric view of one of the buckets of the motor control center of Figure 1, also showing a portion of the motor control center bus assembly in phantom line drawing;
Figure 3 is a schematic diagram for the motor control center and bus assembly therefor of Figure 2;
Figure 4 is a schematic diagram of a motor control center and bus assembly therefor, in accordance with an embodiment of the disclosed concept; and
Figure 5 is a schematic diagram of a motor control center and bus assembly therefor, in accordance with another embodiment of the disclosed concept.

### DESCRIPTION OF THE PREFERRED EMBODIMENTS

As employed herein, the term "motor control center" refers to any known or suitable low voltage control gear expressly including, but not limited to, switchboards.

As employed herein, the term "low voltage control gear" refers to any known or suitable electrical apparatus having a horizontal bus feeding a series of vertical buses and associated electrical switching apparatus or subunits and expressly includes, but is not limited to, motor control centers and switchboards.

As employed herein, the statement that two or more parts are "connected" or "coupled" together shall mean that the parts are joined together either directly or joined through one or more intermediate parts. Further, as employed herein, the statement that two or more parts are "attached" shall mean that the parts are joined together directly.

As employed herein, the term "number" shall mean one or an integer greater than one (i.e., a plurality).

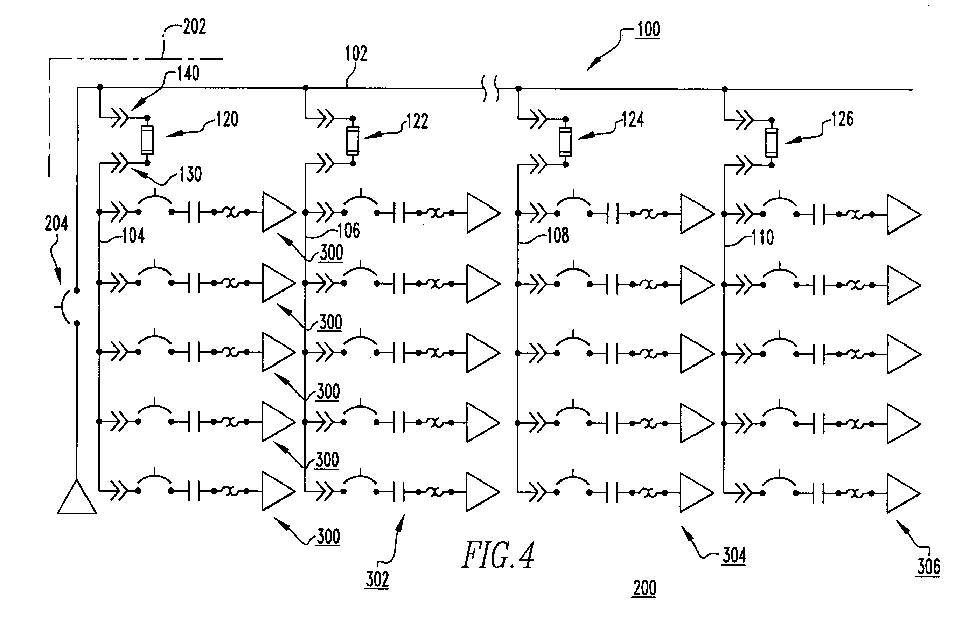

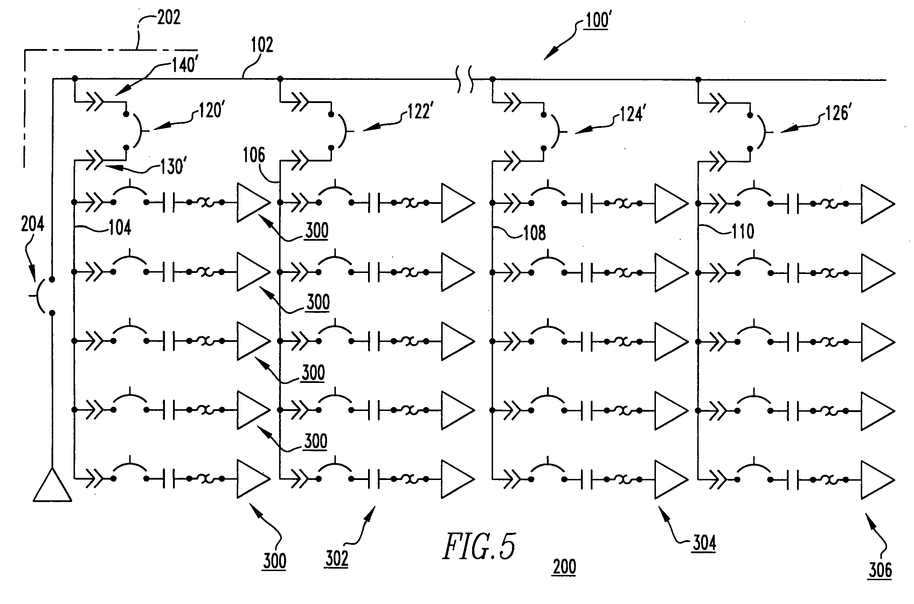

Figures 4 and 5 show schematic diagrams of a bus assembly 100 for a motor control center 200 in accordance with the disclosed concept. The motor control center generally includes an enclosure 202 (partially shown in simplified form in Figures 4 and 5; see also, for example and without limitation, enclosure 12 of Figure 1), an electrical switching apparatus such as, for example and without limitation, a circuit breaker 204, which is removably coupled to the enclosure 202, and at least subunit 300,302,304,306.

The bus assembly 100 preferably includes a horizontal bus 102 electrically connected to the aforementioned electrical switching apparatus (e.g., without limitation, a circuit breaker 204). A number of vertical buses 104,106,108,110 (four are shown in the examples shown and described herein) electrically connect corresponding subunits 300,302,304,306 to the horizontal bus 102. A number of short circuit protective devices (SCPDs) 120,122,124,126 (four are shown in the examples shown and described herein) are employed between the horizontal bus 102 and corresponding vertical buses 104,106,108,110. In the non-limiting example of Figure 4, the bus assembly 100 includes four vertical buses 104,106,108,110 having subunits 300,302,304,306 and being electrically connected by way of SCPDs 120,122,124,126, respectively, to the horizontal bus 102. It will, however, be appreciated that any known or suitable alternative number and/or configuration of vertical buses, subunits and/or SCPDs could be employed, without departing from the scope of the disclosed concept. For example and without limitation, in Figures 4 and 5 the subunits are starter units 300,302,304,306, although other types and/or configurations of subunits (e.g., without limitation, feeder units (not shown)) could be employed.

Among other benefits, each of the SCPDs 120,122,124,126 is structured to protect the corresponding vertical bus 104,106,108,110 and associated starter unit 300,302,304,306, respectively. More specifically, the SCPDs 120,122,124,126 limit arc flash energy, thereby providing the motor control center 200 with enhanced arc flash protection. That is, motor control centers 200 are typically structured to withstand certain arcing events having associated electrical current levels, including a peak current level and associated arc flash energy. Furthermore, the motor control center 200 is rated to withstand such arcing event for a predetermined duration. In accordance with the disclosed concept, each of the SCPDs 120,122,124,126 reduces the peak current levels and arc flash energy experienced by the associated subunits 300,302,304,306 (e.g., without limitation, starter units) and rapidly clears the arcing event from the corresponding vertical bus 104,106,108,110.

In one non-limiting example, which is provided solely for purposes of illustration and is not meant to limit the scope of the disclosed concept, the motor control center 200 is a three-phase relatively low voltage (e.g., up to about 600 V) system having a three-phase horizontal bus 102 rated up to about 3200 A, and being fed by a primary or main circuit breaker 204 rated at about 3200 A. Typical vertical bus ratings are 300 A, 600 A, 800 A and 1200 A. The motor control center 200 is rated to withstand a short circuit current of a level typically in the range of about 42 kA, about 65 kA and about 100 kA for a time duration of about 50 ms for NEMA products, and up to 1.0 second for IEC products. The actual theoretical peak current levels for such motor control centers 200 could approach up to 231 kA, or more. The clearing time for such a system to clear the arcing condition is about 50 ms (e.g., about three cycles) for a NEMA application. The SCPD (see, for example, SCPD 120) limits the peak current level to about 50 kA, and a clearing time of about one-half of a cycle (e.g., without limitation, about 8 ms). Consequently, the arc flash energy associated with the arcing event can be advantageously predicted as being limited to a level of about 1.2 Cal/cm². It will, therefore, be appreciated that the disclosed bus assembly 100 and, in particular, the short circuit protective devices (e.g., without limitation, SCPDs 120,122,124,126) therefor, substantially reduce prior art arc flash energy levels and thereby significantly improve arc flash protection for the motor control center 200.

Preferably, each of the short circuit protective devices (see, for example, SCPD 120) is in the form of a plug-in module removably connected to the horizontal bus 102 of the bus assembly 100. In the example of Figure 4, the plug-in modules are fuses 120,122,124,126, which are removably electrically connected to the horizontal bus 102 and/or corresponding vertical bus (see, for example, vertical bus 104) by any known or suitable electrical connector(s) 130,140 (e.g., without limitation, male/female electrical connectors (not shown)).

As previously noted, it will be appreciated that any known or suitable alternative number, type and/or configuration of short circuit protective devices 120,122,124,126 could be employed, without departing from the disclosed concept. For example and without limitation, in the example of Figure 5, the bus assembly 100' employs SCPDs which are circuit breakers 120',122',124',126' that provide the aforementioned short circuit and arc flash protection to a corresponding vertical bus 104,106,108,110 and associated subunit(s) 300,302,304,306 (e.g., without limitation, feeder units; starter units (shown)), respectively. Preferably, although not necessarily, the circuit breakers 120',122',124',126', like the fuses 120,122,124,126 discussed hereinabove with respect to the example of Figure 4, form plug-in modules removably electrically connected between the horizontal bus 102 and corresponding vertical bus (see, for example, vertical bus 104) by suitable electrical connectors 130',140'.

The SCPDs 120,122,124,126 (Figure 4),120',122',124',126' (Figure 5) also provide an advantageous safety feature in that the units can be racked out (e.g., withdrawn) and racked in while the operator is safely positioned behind a dead front door of the motor control center 200. Specifically, the door acts as a barrier protecting the operator from arc flash and associated blast effects. In other words, the disclosed SCPD concept can be implemented with the various safety features of the racking system(s) described, for example and without limitation, in U.S. Patent Application Publications 2009/0086414, 2008/0258667, 2008/0023211 and 2008/0022673, which are incorporated herein by reference.

In addition to the aforementioned benefits, it will be appreciated that, by reducing the short circuit mechanical and electrical stresses on the vertical buses 104,106,108,110 and other components of the motor control center 200, the disclosed concept affords the ability to develop relatively compact bus and subunit configurations. By way of example and without limitation, electrically insulated structural supports (e.g., braces) (not shown, but generally well known) are typically required for the vertical buses 104,106,108,110 of the motor control center 200. Traditionally, relatively expensive materials such as, for example high-strength glass reinforced polyester or known or suitable thermoset plastic material has been employed to provide the requisite electrical insulation while being capable of withstanding arc flash energy and associated blast forces. With the reduced forces (e.g., without limitation, up to 25 percent reduction, or more) afforded by the disclosed bus assembly 100, more readily available and cost-effective materials such as, for example and without limitation thermal plastic materials, can be employed to provide the necessary electrical insulation. Additionally, the positioning (e.g., spacing) of the structural support (e.g., without limitation, steel bracing brackets (not shown, but generally well known)) is dictated by the different bus ratings (e.g., without limitation 42 kA; 65 kA; 100 kA). In other words, to withstand the higher associated forces more braces are typically added as the bus rating increases. For example and without limitation, for a 42 kA rating the braces are generally disposed (e.g., spaced apart) about 18 inches, for a 65 kA rating the braces are disposed about 12 inches apart, and for a 100 kA the braces are disposed about every 6 inches. However, the reduced forces associated with the disclosed motor control center 200 and bus assembly 100 therefor enable the 42 kA bracing configuration (e.g., without limitation, braces every 18 inches) to become standard.

It will, therefore, be appreciated that the motor control center subunits 300,302,304,306 (e.g., without limitation, feeder units; starter units (shown)), SCPDs 120,122,124,126 (Figure 4), and vertical bus structures 104,106,108,110 can be more closely configured. For example and without limitation, that the UL recognized component series rating category DKSY2 can be employed for establishing the proper compact configuration. Thus, by way of example, for 100 kA system requirements at 480 V and the more demanding 600 V systems, motor control center starter units 300,302,304,306 and feeder units (not shown) can use a lower rated circuit breaker, and for 600 V systems, the need for an additional current limiter accessory can be eliminated.

While specific embodiments of the disclosed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed concept which is to be given the full breadth of the claims appended and any and all equivalents thereof.

### Further summary of the invention:

1. A bus assembly for a motor control center, said motor control center including an enclosure, an electrical switching apparatus removably coupled to said enclosure, and at least one subunit, said bus assembly comprising:
   a horizontal bus structured to be electrically connected to said electrical switching apparatus;
   a number of vertical buses each structured to electrically connect a corresponding one of said at least one subunit to said horizontal bus; and
   a number of short circuit protective devices each being disposed between said horizontal bus and a corresponding one of said vertical buses.
2. The bus assembly of 1 wherein said motor control center is structured to withstand an arcing event; wherein said arcing event has an associated peak current level and arc flash energy; and wherein each of said short circuit protective devices is structured to reduce the peak current level and arc flash energy experienced by said at least one subunit.
3. The bus assembly of 2 wherein said short circuit protective devices limit the peak current level to about 50 kA.
4. The bus assembly of 2 wherein said motor control center is rated to withstand said arcing event for a predetermined duration; and wherein said short circuit protective devices are structured to clear said arcing event from said corresponding one of said vertical buses faster than said predetermined duration.
5. The bus assembly of 4 wherein said short circuit protective devices are structured to clear said arcing event in about 8 ms.
6. The bus assembly of 1 wherein said number of short circuit protective devices is a number of circuit breakers.
7. The bus assembly of 1 wherein said number of short circuit protective devices is a number of fuses.
8. The bus assembly of 1 wherein said number of short circuit protective devices is a number of plug-in modules removably connected to said horizontal bus.
9. The bus assembly of 1 wherein said number of vertical buses is a plurality of vertical buses; wherein said at least one a subunit is a plurality of subunits; wherein said number of short circuit protective devices is a plurality of short circuit protective devices; and wherein each of said short circuit protective devices is disposed between said horizontal bus and a corresponding one of said vertical buses in order to electrically connect a corresponding one of said subunits to said horizontal bus.
10. The bus assembly of 1 wherein said electrical switching apparatus is a circuit breaker.
11. A motor control center comprising:
   an enclosure;
   an electrical switching apparatus removably coupled to said enclosure;
   at least one subunit; and
   a bus assembly comprising:
      a horizontal bus electrically connected to said electrical switching apparatus,
      a number of vertical buses each electrically connecting a corresponding one of said at least one subunit to said horizontal bus, and
      a number of short circuit protective devices each being disposed between said horizontal bus and a corresponding one of said vertical buses.
12. The motor control center of 11 wherein said motor control center is structured to withstand an arcing event; wherein said arcing event has an associated peak current level and ac flash energy; and wherein each of said short circuit protective devices is structured to reduce the peak current level and arc flash energy experienced by said at least one subunit.
13. The motor control center of 12 wherein said short circuit protective devices limit the peak current level to about 50 kA.
14. The motor control center of 12 wherein said motor control center is rated to withstand said arcing event for a predetermined duration; and wherein said short circuit protective devices are structured to clear said arcing event from said corresponding one of said vertical buses faster than said predetermined duration.
15. The motor control center of 14 wherein said short circuit protective devices are structured to clear said arcing event in about 8 ms.
16. The motor control center of 11 wherein said number of short circuit protective devices of said bus assembly is a number of circuit breakers.
17. The motor control center of 11 wherein said number of short circuit protective devices of said bus assembly is a number of fuses.
18. The motor control center of 11 wherein said number of short circuit protective devices of said bus assembly is a number of plug-in modules removably connected to said horizontal bus.
19. The motor control center of 11 wherein said number of vertical buses of said bus assembly is a plurality of vertical buses; wherein said at least one a subunit is a plurality of subunits; wherein said number of short circuit protective devices is a plurality of short circuit protective devices; and wherein each of said short circuit protective devices is disposed between said horizontal bus and a corresponding one of said vertical buses in order to electrically connect a corresponding one of said subunits to said horizontal bus.
20. The motor control center of 11 wherein said electrical switching apparatus is a circuit breaker.

## Claims

1. A bus assembly for a motor control center, said motor control center including an enclosure, an electrical switching apparatus removably coupled to said enclosure, and at least one subunit, said bus assembly comprising:
a horizontal bus structured to be electrically connected to said electrical switching apparatus;
a number of vertical buses each structured to electrically connect a corresponding one of said at least one subunit to said horizontal bus; and
a number of short circuit protective devices each being disposed between said horizontal bus and a corresponding one of said vertical buses.

2. The bus assembly of claim 1 wherein said motor control center is structured to withstand an arcing event; wherein said arcing event has an associated peak current level and arc flash energy; and wherein each of said short circuit protective devices is structured to reduce the peak current level and arc flash energy experienced by said at least one subunit.

3. The bus assembly of claim 2 wherein said short circuit protective devices limit the peak current level to about 50 kA.

4. The bus assembly of claim 2 wherein said motor control center is rated to withstand said arcing event for a predetermined duration; and wherein said short circuit protective devices are structured to clear said arcing event from said corresponding one of said vertical buses faster than said predetermined duration.

5. The bus assembly of claim 4 wherein said short circuit protective devices are structured to clear said arcing event in about 8 ms.

6. The bus assembly of claim 1 wherein said number of short circuit protective devices is a number of circuit breakers.

7. The bus assembly of claim 1 wherein said number of short circuit protective devices is a number of fuses.

8. The bus assembly of claim 1 wherein said number of short circuit protective devices is a number of plug-in modules removably connected to said horizontal bus.

9. The bus assembly of claim 1 wherein said number of vertical buses is a plurality of vertical buses; wherein said at least one a subunit is a plurality of subunits; wherein said number of short circuit protective devices is a plurality of short circuit protective devices; and wherein each of said short circuit protective devices is disposed between said horizontal bus and a corresponding one of said vertical buses in order to electrically connect a corresponding one of said subunits to said horizontal bus.

10. The bus assembly of claim 1 wherein said electrical switching apparatus is a circuit breaker.

11. A motor control center comprising:
an enclosure;
an electrical switching apparatus removably coupled to said enclosure;
at least one subunit; and
a bus assembly as set forth in any of claims 1 to 10.

12. The motor control center of claim 11 wherein said electrical switching apparatus is a circuit breaker.
